# EUROPÄISCHE PATENTSCHRIFT

(11) **EP 4 416 445 B1**
(45) Veröffentlichungstag und Bekanntmachung des Hinweises auf die Patenterteilung: **19.02.2025**
(21) Anmeldenummer: 23716800.0
(22) Anmeldetag: 30.03.2023
(51) Int. Cl.: F27B 7/20, C04B 7/43, F27D 17/00

(54) **VORRICHTUNG UND VERFAHREN ZUR ABTRENNUNG VON BEI DER KLINKERHERSTELLUNG ERZEUGTEM KOHLENDIOXID**
DEVICE AND METHOD FOR SEPARATING CARBON DIOXIDE GENERATED IN CLINKER PRODUCTION
DISPOSITIF ET PROCÉDÉ DE SÉPARATION DE DIOXYDE DE CARBONE DÉGAGÉ DANS LA PRODUCTION DE CLINKER

(30) Priorität: 08.04.2022 DE 102022203557; 08.04.2022 BE 202205265
(43) Veröffentlichungstag der Anmeldung: 21.08.2024
(73) Patentinhaber: thyssenkrupp Polysius GmbH, 59269 Beckum (DE); thyssenkrupp AG, 45143 Essen (DE)
(72) Erfinder: LEMKE, Jost, 59320 Ennigerloh (DE); WILLMS, Eike, 44309 Dortmund (DE); KIMMIG, Constantin, 59494 Soest (DE)
(74) Vertreter: thyssenkrupp Intellectual Property GmbH
(86) Internationale Anmeldenummer: PCT/EP2023/058278
(87) Internationale Veröffentlichungsnummer: WO 2023/194197

(56) Entgegenhaltungen:
- WO-A1-2010/046345

## Beschreibung

Die Erfindung betrifft die Nutzung niederkalorischer Wärme beim Brennprozess von Klinker, um das beim Brennprozess erzeugte Kohlendioxid kryotechnisch abzuscheiden und somit nicht in die Umwelt abzugeben.

Im Rahmen des Klimaschutzes wird die Vermeidung von Kohlendioxidemissionen zunehmend wichtig. Gerade bei der Herstellung von Klinker wird neben dem aus der Verbrennung von Brennstoff auch aus dem eingesetzten mineralischem Material, insbesondere Kalkstein, Kohlendioxid freigesetzt. Es ist daher wünschenswert, gerade dieses Kohlendioxid abzuscheiden und somit nicht in die Atmosphäre gelangen zu lassen.

Um diese Abscheidung zu vereinfachen, wurden bereits Verfahren entwickelt, um das Kohlendioxid vereinfacht abscheiden zu können. Daher wird im sogenannten Oxyfuel-Verfahren nicht mit Luft, sondern mit stark angereichertem Sauerstoff gearbeitet, dass ausgehend von reinem Sauerstoff und vollständiger Umsetzung am Ende bereits reines Kohlendioxid entstehen würde (zuzüglich leicht abtrennbarem Wasser). Dieses vereinfacht die Abtrennung, spart somit bei der Abtrennung Energie und vermeidet zusätzliche Emissionen.

Aus der DE 10 2018 206 673 A1 ist ein Verfahren zur Klinkerherstellung mit erhöhtem Sauerstoffgehalt bekannt.

Aus der DE 10 2018 206 674 A1 ist ein weiteres Verfahren zur Klinkerherstellung mit erhöhtem Sauerstoffgehalt bekannt.

Aus der WO 2010 / 046 345 A1 ist ein Verfahren und eine Anlage zur Herstellung von Zementklinker bekannt.

Eine übliche Weise zur Kohlendioxidabtrennung und anschließende Lagerung oder Verarbeitung ist die kryotechnische Abtrennung und optional zusätzlich eine Verflüssigung. Diese ist jedoch selbst energieaufwändig sowohl für Kompression als auch für die Kühlung, sodass durch die hierfür notwendige Energie eine weitere potentielle Emissionsquelle geschaffen wird.

Aufgabe der Erfindung ist es, den Prozess der Abscheidung möglichst energiesparend durchzuführen.

Gelöst wird diese Aufgabe durch die Anlage mit den in Anspruch 1 angegebenen Merkmalen sowie durch das Verfahren mit den in Anspruch 9 angegebenen Merkmalen. Vorteilhafte Weiterbildungen ergeben sich aus den Unteransprüchen, der nachfolgenden Beschreibung sowie den Zeichnungen.

Die erfindungsgemäße Anlage dient zur Herstellung von Zementklinker sowie zur Abtrennung des bei der Klinkerherstellung entstandenen Kohlendioxids aus dem Abgasstrom. Die Anlage weist einen Vorwärmer, einen Calcinator, einen Ofen und einen Produktkühler auf. Das zu behandelnde Material wird zumeist gemahlen in den Vorwärmer gegeben. Beispielswiese und bevorzugt ist der Vorwärmer eine Kaskade von 3 bis 6 Gleichstromwärmetauschern mit Abscheidezyklone. Das zu behandelnde Material wird im Vorwärmer erwärmt und erwärmt aus dem Vorwärmer in den Calcinator überführt. Im Calcinator erfolgt eine erste Umsetzung, wobei üblicherweise ein Großteil des Kohlendioxids aus dem mineralischen Material freigesetzt wird. Das Material wird dann in den Ofen, zumeist einen Drehrohrofen überführt und gelangt vom Drehrohrofen in einen Produktkühler. Der Produktkühler dient zum einen dazu, das Produkt, den Klinker, abzukühlen. Gleichzeitig wird das dem Ofen zugeführte Verbrennungsgas dadurch im Produktkühler vorgewärmt. Das Verbrennungsgas kann aus dem Ofen dem Calcinator und auch zusätzlich oder alternativ aus einem weiteren Bereich des Produktkühlers dem Calcinator zugeführt werden. Aus dem Calcinator gelangt das warme Abgas in den Vorwärmer und verlässt diesen an dem Ende, an welchem das kalte Rohmaterial zugeführt wird. Dieser Klinkerprozess kann in allen dem Fachmann geläufigen Weisen ausgeführt werden. Insbesondere und bevorzugt kann der Klinkerprozess nach dem Oxyfuel-Verfahren erfolgen, die Anlage also für den Betrieb mit angereichertem oder reinem Sauerstoff ausgelegt sein. Die Anlage weist weiter eine Kohlendioxidabtrennungsvorrichtung auf. Bevorzugt handelt es sich um eine kryotechnische Abscheidung, sodass das Kohlendioxid bevorzugt unter Druck gasförmig, flüssig oder als Zwei-Phasen-Gemisch am Ende vorliegt. Die Anlage weist weiter eine Kältebereitstellungsvorrichtung auf. Die Kältebereitstellungsvorrichtung ist mit der Kohlendioxidabtrennungsvorrichtung verbunden und stellt die für die Kohlendioxidabscheidung benötigte Kälte zur Verfügung. Weiter weist die Anlage wenigstens einen ersten Gaswärmetauscher auf. Der Gaswärmetauscher überträgt die Wärme eines Gasstroms auf ein Wärmeträgermedium. Bevorzugt ist das Wärmeträgermedium Dampf.

Erfindungsgemäß ist die Kältebereitstellungsvorrichtung eine Absorptionskältemaschine. Die Absorptionskältemaschine weist einen Kältemittelzweig und einen Lösungskreis auf. Die Absorptionskältemaschine weist einen Austreiber auf, an dem der Kältemittelzweig vom Lösungskreis abzweigt, und einen Absorber auf, an dem der Kältemittelzweig in den Lösungskreis zurückgeführt wird. Der Kältemittelzweig weist ein Verdampfer und einen Kondensator auf. Im Verdampfer wird die Umgebungswärme aufgenommen und so Kälte erzeugt. Im Kondensator wird die Wärme abgegeben, beispielsweise an die Umgebung. Kältemittelzweig und Lösungskreis bilden somit zusammen einen geschlossenen Kreislauf. Es werden also beide Komponenten des Kältemittels der Absorptionskältemaschine somit im Kreis geführt. Der Kältemittelzweig und der Lösungskreis bilden somit zusammen ein geschlossenes System. Der erste Gaswärmetauscher ist mit dem Austreiber der Absorptionskältemaschine verbunden. Absorptionskältemaschinen arbeiten üblicherweise mit einem Wärmeverhältnis zwischen 0,5 bis 1,2 und erlauben damit eine wirtschaftliche Nutzung der Abwärme. Bei der Verstromung von Abwärme in Klinkerproduktionsanlagen werden geringe Wirkungsgrade von weniger als 20% erreicht. Somit kann in Summe Energie eingespart und damit weitere Kohlendioxidemission zur Energieerzeugung vermieden werden. Bevorzugt ist die Absorptionskältemaschine eine Absorptionskältemaschine auf der Basis von Lithiumbromid oder von Ammoniak. Dieses sind auch die beiden geläufigsten Typen einer Absorptionskältemaschine und dem Fachmann bekannt.

In der Absorptionskältemaschine zirkuliert ein Kältemittel in einem geschlossenen Kreislauf zwischen dem inneren Bereich (im Kältemittelzweig) und dem äußeren Bereich. (Lösungskreis) Im inneren Bereich wird im sogenannten Verdampfer Kältemittel verdampft und dadurch der Umgebung Wärme entzogen und eine Temperatur gesenkt. Das gasförmige Kältemittel wird in den äußeren Bereich geleitet und dort wieder verflüssigt. Bei Absorptionskältemaschinen erfolgt es durch Lösungen, die die Fähigkeit haben, Kältemitteldampf zu binden, das heißt zu absorbieren. Besonders üblich sind Ammoniak und Wasser sowie Wasser und Lithiumbromid. Dafür weist die Absorptionskältemaschine einen Absorber und einen Austreiber auf. Während im Absorber das Lösen unter Abkühlung erfolgt, werden die Komponenten im Austreiber durch Zufuhr von Energie getrennt.

Wird beispielsweise im Calcinator Biomasse als Brennstoff eingesetzt, so ist es sogar möglich, mehr Kohlendioxid zu binden, als aus nicht regenerativen Quellen stammt und damit praktisch sogar Kohlendioxid aus dem Kreislauf zu entfernen und damit nicht nur die Erwärmung nicht weiter zu verstärken, sondern sogar zurückzufahren.

In einer weiteren Ausführungsform der Erfindung ist der erste Gaswärmetauscher zwischen dem Gasauslass des Vorwärmers und der Kohlendioxidabtrennungsvorrichtung angeordnet. Diese Position ist besonders bevorzugt, da hier üblicherweise ein Temperaturunterschied zwischen dem Austritt aus dem Vorwärmer und dem Eintritt in Kohlendioxidabtrennungsvorrichtung vorliegt.

In einer weiteren Ausführungsform der Erfindung weist der Produktkühler wenigstens einen ersten Warmgaskühlerauslass auf. Der erste Gaswärmetauscher oder ein zweiter Gaswärmetauscher, wenn der erste Gaswärmetauscher zwischen dem Vorwärmer und der Kohlendioxidabtrennungsvorrichtung angeordnet ist, ist mit dem ersten Warmgaskühlerauslass des Produktkühlers verbunden.

Üblicherweise ist der Produktkühler in zwei oder drei Bereiche unterteilt. Ein erster, dem Ofen benachbarter Teil, wird mit dem Material aus dem Ofen beschickt. Das durch das Produkt erwärmte Gas wird dann üblicherweise entsprechend vorgewärmt dem Ofen im Gegenstrom zugeführt und dient dort als Sauerstoffquelle für die Verbrennung. Gerade für den Oxyfuel-Betreib erfolgt hier die Kühlung entsprechend mittels beispielsweise eines Kühlgases mit einem Sauerstoffanteilen von mehr als 50%, bevorzugt von mehr als 90 %. Das in dem ersten Bereich vorgekühlte Material wird dann in einem zweiten Bereich weiter gekühlt. Beispielsweise kann hier normale Luft verwendet werden, was deutlich günstiger als Sauerstoff ist. Diese Luft wird dann über den ersten Warmgaskühlerauslass abgegeben und dem ersten Gaswärmetauscher oder dem zweiten Gaswärmetauscher zugeführt. Das Gas kann dann entweder an die Umgebung abgegeben werden oder dem Calcinator als Verbrennungsgas zugeführt werden. Optional kann dann ein dritter Bereich sich an den zweiten Bereich anschließen. Der dritte Bereich weist dann einen zweiten Warmgaskühlerauslass auf. Dieser dritte Bereich wird üblicherweise mit Luft betrieben, die dann final in die Umgebung abgegeben wird. Es ist hierbei auch möglich, insbesondere im zweiten oder dritten Bereich des Produktkühlers das Kühlgas im Kreislauf zu führen, also durch den Produktkühler und einen Gaswärmetauscher und wieder zurück in den Produktkühler.

In einer weiteren Ausführungsform der Erfindung weist der Produktkühler entsprechend wenigstens einen zweiten Warmgaskühlerauslass auf. Weiter weist die Anlage einen dritten Gaswärmetauscher auf. Der dritte Gaswärmetauscher ist mit einem zweiten Warmgaskühlerauslass des Produktkühlers verbunden. Der dritte Gaswärmetauscher ist mit dem Austreiber der Absorptionskältemaschine verbunden. Hierdurch kann der größte Teil der im Produktkühler abgegebenen thermischen Energie genutzt werden, entweder direkt durch die Temperatur des dem Ofen zugeführten Gases oder eben zur Nutzung zur Erzeugung von Kälte, sodass selbst diese niederkalorische Energie noch gewinnbringend genutzt werden kann und dadurch der Einsatz höherwertiger Energie, beispielsweise Strom, vermieden werden kann.

In einer weiteren Ausführungsform der Erfindung sind der erste Gaswärmetauscher oder der zweite Gaswärmetauscher, wenn der erste Gaswärmetauscher zwischen dem Vorwärmer und der Kohlendioxidabtrennungsvorrichtung angeordnet ist, und der dritte Gaswärmetauscher mit einer Wärmesammelvorrichtung verbunden. Die Wärmesammelvorrichtung ist mit dem Austreiber der Absorptionskältemaschine verbunden. Die Wärmesammelvorrichtung kann beliebig, beispielsweise als Speicher oder als Wärmetauscher ausgebildet sein.

In einer weiteren Ausführungsform der Erfindung ist vor zwischen dem Produktkühler und dem Gaswärmetauscher ein Heißgaswärmetauscher angeordnet. Der Heißgaswärmetauscher ist mit einer Turbine und die Turbine mit einem Generator zur Stromerzeugung verbunden. Diese Ausführungsform ist bevorzugt, wenn das Gas den Produktkühler mit vergleichsweise hoher Temperatur verlässt, also in der Lage ist höherwertigen Dampf zu erzeugen. Hat das austretende Gas beispielsweise 500 °C, so kann das Gas in dem Heißgaswärmetauscher beispielsweise auf 350 °C abgekühlt werden und dabei Dampf erzeugen, der zur effizienten Stromerzeugung verwendet werden kann. Die niederkalorische Restwärme wird dann über den Gaswärmetauscher der Absorptionskältemaschine zugeführt und damit letztendlich effizienter genutzt. Hierbei kann der Heißgaswärmetauscher beispielsweise dem zweiten Bereich oder dem dritten Bereich des Produktkühlers benachbart sein, also entweder mit dem ersten Warmgaskühlerauslass oder dem zweiten Warmgaskühlerauslass verbunden sein. Ist der erste Warmgaskühlerauslass über den ersten Gaswärmetauscher oder den zweiten Gaswärmetauscher mit dem Calcinator verbunden, so ist der Heißgaswärmetauscher bevorzugt nicht mit dem ersten Warmgaskühlerauslass, sondern dem zweiten Warmgaskühlerauslass verbunden.

In einer weiteren Ausführungsform der Erfindung ist zwischen dem Vorwärmer und dem ersten Gaswärmetauscher ein vierter Gaswärmetauscher angeordnet. Der vierte Gaswärmetauscher ist mit dem Austreiber der Absorptionskältemaschine verbunden. Zwischen dem vierten Gaswärmetauscher und dem ersten Gaswärmetauscher ist wenigstens eine erste Abgasbehandlungsvorrichtung angeordnet. Die Abgasbehandlungsvorrichtung kann zum Beispiel zur Oxidation von organischen Verbindungen oder als katalytische Entstickung ausgebildet sein. Ebenso kann es sich um einen Filter, insbesondere um einen Staubfilter handeln. Ebenso kann eine erste Abgasbehandlungsvorrichtung zur Oxidation von organischen Verbindungen und eine zweite Abgasbehandlungsvorrichtung zur katalytischen Entstickung ausgebildet sein.

In einer weiteren Ausführungsform der Erfindung weist die Kohlendioxidabtrennungsvorrichtung einen Wasserabscheider auf. Durch das Abkühlen wird ein Auskondensieren erreicht und aus der Verbrennung zur Wärmeerzeugung entsteht neben Kohlendioxid üblicherweise auch Wasser. Ebenso kann Wasser beispielsweise über Biomasse als Brennstoff ebenfalls direkt eingetragen werden. Daher kann es vorteilhaft sein, zuerst das Wasser in einem Wasserabscheider abzutrennen.

In einem weiteren Aspekt betrifft die Erfindung ein Verfahren zum Betreiben einer Anlage zur Herstellung von Zementklinker und Abtrennung des Kohlendioxids. Alle zuvor für die Anlage bevorzugten Ausführungsformen können auch bevorzugt für das erfindungsgemäße Verfahren verwendet werden. Die Abtrennung des Kohlendioxids erfolgt mittels Kälte. Die Kälte wird mittels einer Absorptionskältemaschine erzeugt. Der Austreiber der Absorptionskältemaschine wird mit einem Wärmeträger, bevorzugt Dampf, mit einer Temperatur von maximal 350 °C betrieben. Der hierfür notwendige Wärmeträger, bevorzugt Dampf, wird durch einen ersten Wärmetauscher erzeugt, wobei der erste Gaswärmetauscher Bestandteil der Anlage zur Herstellung von Zementklinker ist. Der erste Gaswärmetauscher nutzt also gerade niederkalorische Restwärme des Klinkerprozesses, welche sonst nur mit einem noch schlechteren Wirkungsgrad umgewandelt werden könnte. Besonders bevorzugt liegt der Wärmeträger, bevorzugt der Dampf, in einem Temperaturbereich von 150 °C bis 350 °C.

In einer weiteren Ausführungsform der Erfindung wird zur Nutzung von Abwärme von mehr als 350 °C vor dem Gaswärmetauscher ein Heißgaswärmetauscher zur Abkühlung auf höchstens 350 °C verwendet. Der Heißgaswärmetauscher erzeugt mit einer Turbine und die Turbine mit einem Generator Strom. Somit wird der hochwertigste Anteil der Restwärmeenergie in die höchstwertige Energieform Strom umgewandelt und die niederkalorische Restenergie für den Kälteprozess genutzt.

In einer weiteren Ausführungsform der Erfindung ist der Wärmeträger Dampf. Der Dampf wird mit einem Druck von 2 bis 15 bar, bevorzugt mit 2 bis 5 bar, besonders bevorzugt mit 2 bis 3,5 bar, verwendet.

In einer weiteren Ausführungsform der Erfindung wird dem Ofen und dem Calcinator ein Gas mit weniger als 50 % Stickstoff, bevorzugt weniger als 5 % Stickstoff zugeführt. Bevorzugt erfolgt die Klinkerherstellung nach dem Oxyfuel-Verfahren.

In einer weiteren Ausführungsform wird dem Ofen ein Gas mit einem Sauerstoffanteil von bevorzugt wenigstes 50 %, weiter bevorzugt wenigstens 95 % zugeführt.

In einer weiteren Ausführungsform der Erfindung wird die Anlage so betrieben, dass der Kohlendioxidabtrennungsvorrichtung ein Gasstrom mit wenigstens 70 % Kohlendioxid bezogen auf das trockene Gas zugeführt wird.

Nachfolgend ist die erfindungsgemäße Anlage anhand eines in den Zeichnungen dargestellten Ausführungsbeispiels näher erläutert.
Fig. 1 erste beispielhafte Ausführungsform
Fig. 2 zweite beispielhafte Ausführungsform
Fig. 3 dritte beispielhafte Ausführungsform
Fig. 4 vierte beispielhafte Ausführungsform

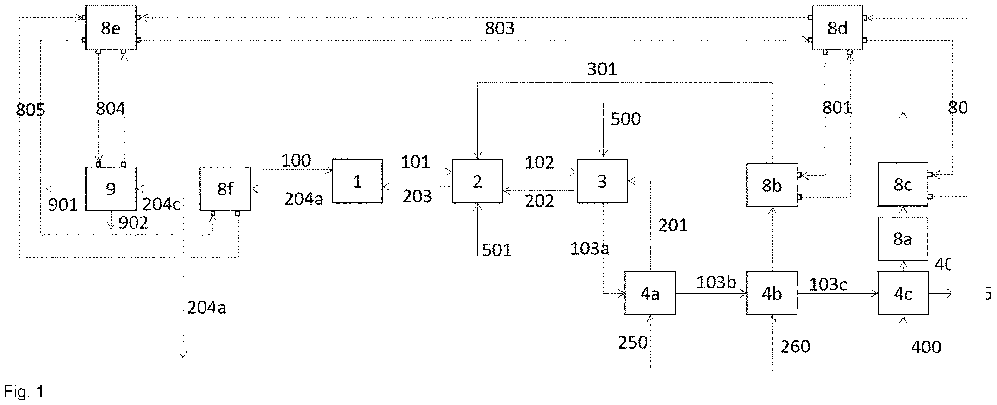

In Fig. 1 ist eine erste beispielhafte Ausführungsform gezeigt. Das Rohmaterial 100 wird in den Vorwärmer 1 eingebracht und dort erwärmt. Der vorgewärmte Materialstrom 101 wird in den Calcinator 2 überführt. Dem Calcinator 2 wird über die Calcinatorbrennstoffzufuhr 501 Brennstoff zugeführt. Des Weiteren wird dem Calcinator 2 über die Tertiärluftleitung 301 im Produktkühler, genauer im zweiten Kühlerbereich 4b vorgewärmte Luft zugeführt. Der calcinierte Materialstrom 102 wir dem Ofen 3, insbesondere einem Drehrohrofen zugeführt. Dem Ofen 3 wird über die Ofenbrennstoffzufuhr 500 Brennstoff zugeführt. Weiter wird dem Ofen 3 über die Sekundärluftzufuhr 201 Luft zugeführt, welche im Produktkühler, genauer im ersten Kühlerbereich 4a, vorgewärmt wurde. Zusätzlich kann dem Ofen 3 über eine Primärluftzufuhr Gas zugeführt werden. Der gebrannte Klinkerstrom 103a wird in den Produktkühler, genauer in den ersten Kühlerbereich 4a überführt. Dort wird der Klinker mit der aus der ersten Kühlergaszufuhr 250 zugeführten Luft, gekühlt. Während die Luft aus dem ersten Kühlerbereich 4a wie bereits beschrieben dem Ofen 3 über die Sekundärluftzufuhr 201 zugeführt. Der teilweise abgekühlte Klinkerstrom 103b wird in den zweiten Kühlerbereich 4b überführt, wo der Klinker mit dem durch die zweite Kühlergaszufuhr 260 zugeführten Luft weiter abgekühlt wird. Anschließend wird der Klinkerstrom 103c in den dritten Kühlerbereich 4c überführt und dort mit der durch die Kühlergaszufuhr 400 zugeführten Luft abgekühlt. Der kalte Produktstrom 105 verlässt die Anlage. Im Gegenstrom zu diesem Materialstrom wird das heiße Gas aus dem Ofen 3 über die Ofengaszufuhr 202 im Calcinator 2 zugeführt. Das heiße Gas aus dem Calcinator 2 wird über die Calcinatorabgasleitung 203 in den Vorwärmer 1 überführt und verlässt abgekühlt den Vorwärmer 1 als Vorwärmerabgasstrom 204a.

Um nun das Kohlendioxid aus dem Vorwärmerabgasstrom 204a teilweise oder vollständig abzuscheiden, weist die Anlage eine Kohlendioxidabtrennungsvorrichtung 9 auf. Die Kohlendioxidabtrennungsvorrichtung 9 ist über einen Kältemittelkreislauf 804 mit einer Absorptionskältemaschine 8e verbunden. Mittels der Kälte wird in der Kohlendioxidabtrennungsvorrichtung 9 zunächst Wasser in einem Wasserabscheider abgeschieden und anschließend das Kohlendioxid verflüssigt. Das Kohlendioxid wird als Kohlendioxidstrom 902 abgegeben und kann entweder gelagert oder umgesetzt werden. Übrig bleibt der Restabgasstrom 901, welcher an die Atmosphäre abgegeben werden kann.

Entscheidend ist nun, dass die Absorptionskältemaschine 8e derart betrieben wird, dass sonst nicht nutzbare Energie für den Abscheideprozess genutzt wird. Hierzu weist die Anlage einen ersten Gaswärmetauscher 8f, einen zweiten Gaswärmetauscher 8b und einen dritten Gaswärmetauscher 8c auf. Der erste Gaswärmetauscher 8f ist zwischen dem Vorwärmer 1 und der Kohlendioxidabtrennungsvorrichtung 9 angeordnet, der zweite Gaswärmetauscher 8b ist mit dem zweiten Kühlerbereich 4b verbunden und der dritte Gaswärmetauscher 8c ist mit dem dritten Kühlerbereich 4c verbunden. Im gezeigten Beispiel sind der zweite Gaswärmetauscher 8b über einen ersten Wärmeträgerkreislauf 801 und der dritte Gaswärmetauscher 8c über einen zweiten Wärmeträgerkreislauf 802 mit einem Sammelwärmetauscher 8d verbunden. Der Sammelwärmetauscher 8d ist dann über einen dritten Wärmeträgerkreislauf 803 mit der Absorptionskältemaschine 8e, insbesondere mit dem Austreiber der Absorptionskältemaschine 8e, verbunden. Der erste Gaswärmetauscher 8f ist über einen vierten Wärmeträgerkreislauf 805 mit der Absorptionskältemaschine 8e, insbesondere mit dem Austreiber der Absorptionskältemaschine 8e, verbunden.

Im gezeigten Beispiel ist zwischen dem dritten Kühlerbereich 4c und dem dritten Wärmetauscher 8c ein Heißgaswärmetauscher 8a angeordnet. Beispielsweise verlässt der Kühlerabluftstrom 401 den dritten Kühlerbereich 4c mit 300 °C. In diesem Fall wird im Heißgaswärmetauscher 8a Dampf erzeugt, der mit einer nicht gezeigten Turbine und einem nicht gezeigten Generator in Strom umgewandelt wird. Dabei wird der Kühlerabluftstrom 401 beispielsweise auf 200 °C abgekühlt und dann in den dritten Gaswärmetauscher 8c geführt.

Im gezeigten Beispiel wird weiter ein Teil des Vorwärmerabgasstrom 204a an die Umgebung abgegeben, beispielsweise, weil im Calcinator 2 Biomasse als Brennstoff verwendet wird und daher das Kohlendioxid nur teilweise abgetrennt werden soll. Es wird daher nur ein Vorwärmerabgasteilstrom 204c in die Kohlendioxidabtrennungsvorrichtung 9 geleitet.

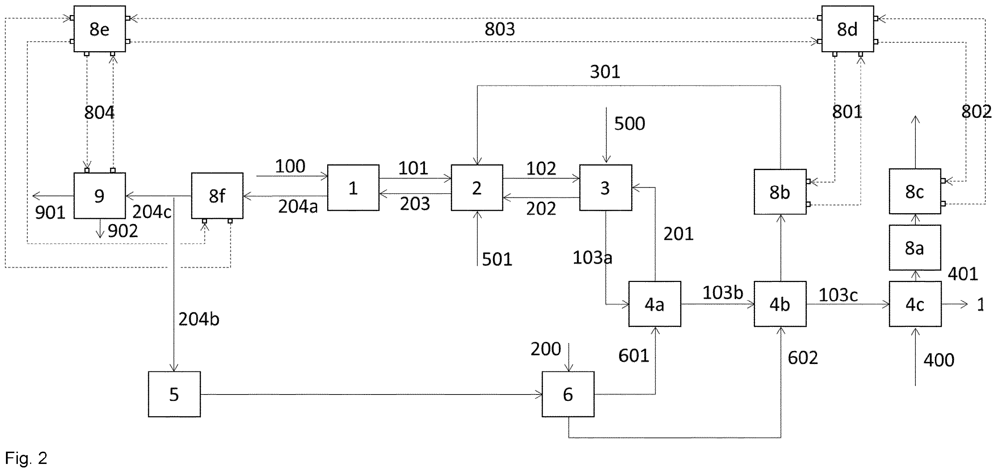

Eine zweite beispielhafte Ausführungsform ist in Fig. 2 gezeigt. Diese unterscheidet sich von der ersten beispielhaften Ausführungsform dadurch, dass hinter dem ersten Gaswärmetauscher 8f ein mit Kohlendioxid angereicherter Kreislaufgasstrom 204b abgetrennt wird und in eine Zwischenkonditionierung 5, beispielsweise einen Filter, einen Gasmischer, einen Kondensator oder einen Sprühturm geleitet wird. Von dort wird der Kreislaufgasstrom in einen Gasmischer 6 geleitet, wo dieser mit der Gaszufuhr 200, insbesondere mit Sauerstoff mit weniger als 5 % Stickstoff, vermischt wird. Von hier wird das Gasgemisch dem ersten Kühlerbereich 4a über eine erste Mischgaszuführung 601 und dem zweiten Kühlerbereich 4b über eine zweite Mischgaszuführung 602 zugeführt. Insbesondere kann der Gasmischer 6 so eingestellt sein, dass die Zusammensetzung in der ersten Mischgaszuführung 601 einen höheren Sauerstoffanteil aufweist als in der zweiten Mischgaszuführung 602.

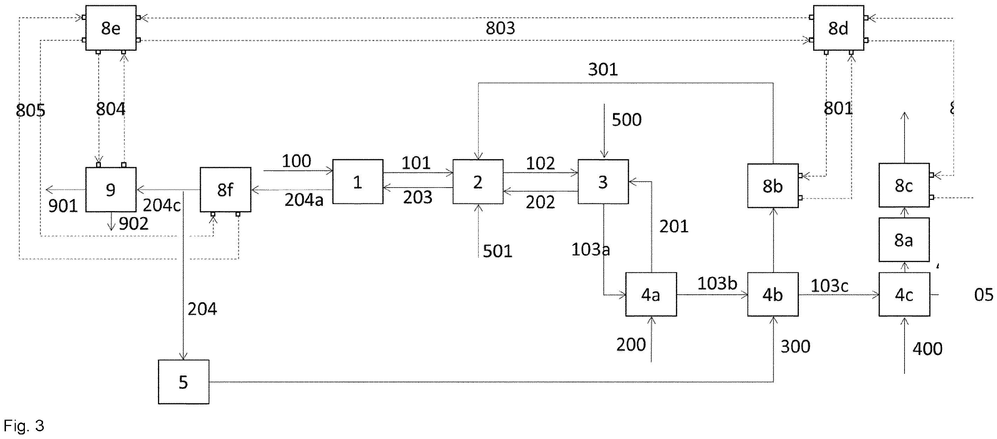

Fig. 3 zeigt eine dritte beispielhafte Ausführungsform. Diese Unterscheidet sich dadurch, dass der Kreislaufgasstrom 204b nach der Zwischenkonditionierung 5 als Kühlergaszufuhr 300 ausschließlich und direkt dem zweiten Kühlerbereich 4b zugeführt wird. Dem ersten Kühlerbereich wird wie in der ersten beispielhaften Ausführungsform über die Gaszufuhr bevorzugt Sauerstoff mit weniger als 5 % Stickstoff zugeführt. Dieses hat den Vorteil, dass das zurückgeführte Inertgas im Calcinator 2 und im Vorwärmer als Trägergas für das mineralische Material zur Verfügung steht.

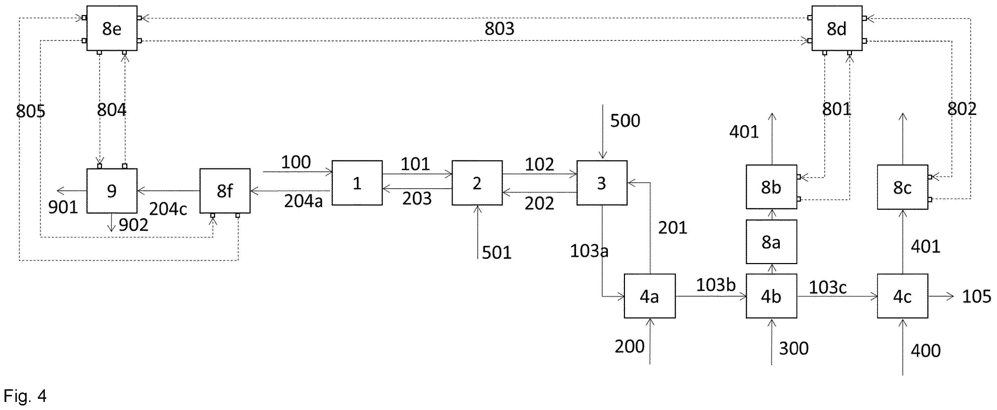

Die in Fig. 4 gezeigte vierte beispielhafte Ausführungsform unterscheidet sich von der ersten beispielhaften Ausführungsform dadurch, dass zum einen, dass der Heißgaswärmetauscher 8a zwischen dem zweiten Kühlerbereich 4b und den zweiten Gaswärmetauscher 8b angeordnet ist und nicht zwischen dem dritten Kühlerbereich 4c und den dritten Gaswärmetauscher 8c. Weiter wird der Gasstrom hinter dem zweiten Gaswärmetauscher 8b als Kühlerabluftstrom 401 abgeführt, beispielsweise an die Atmosphäre abgegeben und nicht in den Calcinator 2 geleitet. Der entscheidende Unterscheid ist somit, dass durch die alleinige Zuführung von vorzugsweise reinem Sauerstoff über die Gaszufuhr 200 der Gasstrom im Calcinator 2 und im Vorwärmer 1 im Vergleich zu herkömmlichen, mit Luft arbeitenden Anlagen deutlich geringer ist, was wiederum bedeutet, dass der Calcinator 2 und der Vorwärmer 1 auf die höhere Tragfähigkeit für mineralisches Material bereits ausgelegt sein müssen.

### Bezugszeichen

- 1: Vorwärmer
- 2: Calcinator
- 3: Ofen
- 4a: erster Kühlerbereich
- 4b: zweiter Kühlerbereich
- 4c: dritter Kühlerbereich
- 5: Zwischenkonditionierung
- 6: Gasmischer
- 8a: Heißgaswärmetauscher
- 8b: zweiter Gaswärmetauscher
- 8c: dritter Gaswärmetauscher
- 8d: Sammelwärmetauscher
- 8e: Absorptionskältemaschine
- 8f: erster Gaswärmetauscher
- 9: Kohlendioxidabtrennungsvorrichtung
- 100: Rohmaterial
- 101: vorgewärmte Materialstrom
- 102: calcinierte Materialstrom
- 103a: Klinkerstrom
- 103b: Klinkerstrom
- 103c: Klinkerstrom
- 103b: Ofenbrennstoffzufuhr
- 105: Produktstrom
- 200: Gaszufuhr
- 201: Sekundärluftzufuhr
- 202: Ofengaszufuhr
- 203: Calcinatorabgasleitung
- 204a: Vorwärmerabgasstrom
- 204b: Kreislaufgasstrom
- 204c: Vorwärmerabgasteilstrom
- 250: erste Kühlergaszufuhr
- 260: zweite Kühlergaszufuhr
- 300: Kühlergaszufuhr
- 301: Tertiärluftleitung
- 400: Kühlergaszufuhr
- 401: Kühlerabluftstrom
- 500: Ofenbrennstoffzufuhr
- 501: Calcinatorbrennstoffzufuhr
- 601: erste Mischgaszuführung
- 602: zweite Mischgaszuführung
- 801: erster Wärmeträgerkreislauf
- 802: zweiter Wärmeträgerkreislauf
- 803: dritter Wärmeträgerkreislauf
- 804: Kältemittelkreislauf
- 805: vierter Wärmeträgerkreislauf
- 901: Restabgasstrom
- 902: Kohlendioxidstrom

## Patentansprüche

1. Anlage zur Herstellung von Zementklinker und Abtrennung des Kohlendioxids aus dem Abgasstrom, wobei die Anlage einen Vorwärmer (1), einen Calcinator (2), einen Ofen (3) und einen Produktkühler aufweist, wobei die Anlage weiter eine Kohlendioxidabtrennungsvorrichtung (9) aufweist, wobei die Anlage eine Kältebereitstellungsvorrichtung aufweist, wobei die Kältebereitstellungsvorrichtung mit der Kohlendioxidabtrennungsvorrichtung (9) verbunden ist, wobei die Anlage wenigstens einen ersten Gaswärmetauscher (8f) aufweist, **dadurch gekennzeichnet, dass** die Kältebereitstellungsvorrichtung eine Absorptionskältemaschine (8e) ist, wobei die Absorptionskältemaschine (8e) einen Kältemittelzweig und einen Lösungskreis aufweist, wobei die Absorptionskältemaschine (8e) einen Austreiber aufweist, an dem der Kältemittelzweig vom Lösungskreis abzweigt, und einen Absorber auf, an dem der Kältemittelzweig in den Lösungskreis zurückgeführt wird, wobei der Kältemittelzweig ein Verdampfer und einen Kondensator aufweist, wobei der erste Gaswärmetauscher (8f) mit dem Austreiber der Absorptionskältemaschine (8e) verbunden ist.

2. Anlage nach Anspruch 1, **dadurch gekennzeichnet, dass** der erste Gaswärmetauscher (8f) zwischen dem Gasauslass des Vorwärmers (1) und der Kohlendioxidabtrennungsvorrichtung (9) angeordnet ist.

3. Anlage nach einem der vorstehenden Ansprüche, **dadurch gekennzeichnet, dass** der Produktkühler wenigstens einen ersten Warmgaskühlerauslass aufweist, wobei der erste Gaswärmetauscher (8f) oder ein zweiter Gaswärmetauscher (8a) mit dem ersten Warmgaskühlerauslass des Produktkühlers verbunden ist.

4. Anlage nach Anspruch 3, **dadurch gekennzeichnet, dass** der Produktkühler wenigstens einen zweiten Warmgaskühlerauslass aufweist, wobei die Anlage einen dritten Gaswärmetauscher (8b) aufweist, wobei der dritte Gaswärmetauscher (8b) mit einem zweiten Warmgaskühlerauslass des Produktkühlers verbunden ist, wobei der dritte Gaswärmetauscher (8b) mit dem Austreiber der Absorptionskältemaschine (8e) verbunden ist.

5. Anlage nach Anspruch 4, **dadurch gekennzeichnet, dass** der erste Gaswärmetauscher (8f) oder der zweite Gaswärmetauscher (8a) und der dritte Gaswärmetauscher (8b) mit einer Wärmesammelvorrichtung verbunden sind, wobei die Wärmesammelvorrichtung mit dem Austreiber der Absorptionskältemaschine (8e) verbunden ist.

6. Anlage nach einem der Ansprüche 3 bis 5, **dadurch gekennzeichnet, dass** vor zwischen dem Produktkühler und dem Gaswärmetauscher ein Heißgaswärmetauscher (8a) angeordnet ist, wobei der Heißgaswärmetauscher (8a) mit einer Turbine und die Turbine mit einem Generator zur Stromerzeugung verbunden ist.

7. Anlage nach einem der vorstehenden Ansprüche in Verbindung mit Anspruch 2, **dadurch gekennzeichnet, dass** zwischen dem Vorwärmer (1) und dem ersten Gaswärmetauscher (8f) ein vierter Gaswärmetauscher angeordnet ist, wobei der vierte Gaswärmetauscher mit dem Austreiber der Absorptionskältemaschine (8e) verbunden ist, wobei zwischen dem vierten Gaswärmetauscher und dem ersten Gaswärmetauscher (8f) wenigstens eine erste Abgasbehandlungsvorrichtung angeordnet ist.

8. Anlage nach einem der vorstehenden Ansprüche, **dadurch gekennzeichnet, dass** die Kohlendioxidabtrennungsvorrichtung (9) einen Wasserabscheider aufweist.

9. Verfahren zum Betreiben einer Anlage zur Herstellung von Zementklinker und Abtrennung des Kohlendioxids, wobei für die Abtrennung des Kohlendioxids Kälte benötigt wird, wobei die Kälte mittels einer Absorptionskältemaschine (8e) erzeugt wird, wobei der Austreiber mit einem Wärmeträger, bevorzugt Dampf, mit einer Temperatur von maximal 350 °C betrieben wird, wobei der Wärmeträger, bevorzugt der Dampf, durch einen ersten Gaswärmetauscher (8f) erzeugt wird, wobei der erste Gaswärmetauscher (8f) Bestandteil der Anlage zur Herstellung von Zementklinker ist.

10. Verfahren nach Anspruch 9, **dadurch gekennzeichnet, dass** zur Nutzung von Abwärme von mehr als 350 °C vor dem Gaswärmetauscher ein Heißgaswärmetauscher (8a) zur Abkühlung auf höchstens 200 °C verwendet wird, wobei der Heißgaswärmetauscher (8a) mit einer Turbine und die Turbine mit einem Generator Strom erzeugt.

11. Verfahren nach einem der Ansprüche 9 bis 10, **dadurch gekennzeichnet, dass** der Wärmeträger Dampf ist, wobei der Dampf mit einem Druck von 2 bis 15 bar verwendet wird.

12. Verfahren nach einem der Ansprüche 9 bis 11, **dadurch gekennzeichnet, dass** dem Ofen (3) und dem Calcinator (2) ein Gas mit weniger als 50 % Stickstoff, bevorzugt weniger als 5 % Stickstoff zugeführt wird.

13. Verfahren nach Anspruch 12, **dadurch gekennzeichnet, dass** die Anlage so betrieben wird, dass der Kohlendioxidabtrennungsvorrichtung (9) ein Gasstrom mit wenigstens 60 % Kohlendioxid zugeführt wird.

## Claims

1. Plant for producing cement clinker and separating the carbon dioxide from the exhaust gas stream, wherein the plant comprises a preheater (1), a calciner (2), a kiln (3) and a product cooler, wherein the plant further comprises a carbon dioxide separation device (9), wherein the installation comprises a cold preparation device, wherein the cold preparation device is connected to the carbon dioxide separation device (9), wherein the installation comprises at least one first gas heat exchanger (8f), **characterised in that in that** the refrigeration supply device is an absorption refrigeration machine (8e), the absorption refrigeration machine (8e) having a refrigerant branch and a solution circuit, the absorption refrigeration machine (8e) having an ejector at which the refrigerant branch branches off from the solution circuit, and an absorber, at which the refrigerant branch is fed back into the solution circuit, the refrigerant branch having an evaporator and a condenser, the first gas heat exchanger (8f) being connected to the expander of the absorption refrigerating machine (8e).

2. System according to claim 1, **characterised in that** the first gas heat exchanger (8f) is arranged between the gas outlet of the preheater (1) and the carbon dioxide separation device (9).

3. System according to one of the preceding claims, **characterised in that** the product cooler has at least one first hot gas cooler outlet, wherein the first gas heat exchanger (8f) or a second gas heat exchanger (8a) is connected to the first hot gas cooler outlet of the product cooler.

4. An installation according to claim 3, **characterised in that** the product cooler comprises at least one second hot gas cooler outlet, the installation comprising a third gas heat exchanger (8b), the third gas heat exchanger (8b) being connected to a second hot gas cooler outlet of the product cooler, the third gas heat exchanger (8b) being connected to the outlet of the absorption refrigeration machine (8e).

5. System according to claim 4, **characterised in that** the first gas heat exchanger (8f) or the second gas heat exchanger (8a) and the third gas heat exchanger (8b) are connected to a heat collecting device, wherein the heat collecting device is connected to the discharge unit of the absorption refrigeration machine (8e).

6. System according to one of claims 3 to 5, **characterised in that** a hot gas heat exchanger (8a) is arranged upstream between the product cooler and the gas heat exchanger, the hot gas heat exchanger (8a) being connected to a turbine and the turbine being connected to a generator for generating electricity.

7. Installation according to one of the preceding claims in conjunction with claim 2, **characterised in that** a fourth gas heat exchanger is arranged between the preheater (1) and the first gas heat exchanger (8f), the fourth gas heat exchanger being connected to the exhaust driver of the absorption refrigeration machine (8e), at least one first exhaust gas treatment device being arranged between the fourth gas heat exchanger and the first gas heat exchanger (8f).

8. System according to one of the preceding claims, **characterised in that** the carbon dioxide separation device (9) has a water separator.

9. Method for operating a plant for the production of cement clinker and separation of the carbon dioxide, wherein cold is required for the separation of the carbon dioxide, wherein the cold is generated by means of an absorption refrigeration machine (8e), wherein the expulsion unit is equipped with a heat transfer medium, preferably steam, with a maximum temperature of 350°C, wherein the heat transfer medium, preferably the steam, is generated by a first gas heat exchanger (8f), wherein the first gas heat exchanger (8f) is a component of the plant for the production of cement clinker.

10. Method according to claim 9, **characterised in that** a hot gas heat exchanger (8a) is used upstream of the gas heat exchanger to cool waste heat of more than 350°C to a maximum of 200°C, the hot gas heat exchanger (8a) generating electricity with a turbine and the turbine generating electricity with a generator.

11. Process according to one of claims 9 to 10, **characterised in that** the heat transfer medium is steam, the steam being used at a pressure of 2 to 15 bar.

12. Process according to one of claims 9 to 11, **characterised in that** the furnace (3) and the calciner (2) are supplied with a gas containing less than 50% nitrogen, preferably less than 5% nitrogen.

13. Process according to claim 12, **characterised in that** the installation is operated in such a way that a gas stream containing at least 60% carbon dioxide is fed to the carbon dioxide separation device (9).

## Revendications

1. Installation pour la production de clinker de ciment et la séparation du dioxyde de carbone du flux de gaz d'échappement, dans laquelle l'installation comprend un préchauffeur (1), un calcinateur (2), un four (3) et un refroidisseur de produit, dans laquelle l'installation comprend en outre un dispositif de séparation du dioxyde de carbone (9), dans laquelle l'installation comprend un dispositif de préparation à froid, dans laquelle le dispositif de préparation à froid est connecté au dispositif de séparation du dioxyde de carbone (9) , dans laquelle l'installation comprend au moins un premier échangeur de chaleur à gaz (8f), **caractérisé en ce que** le dispositif d'alimentation en réfrigération est une machine de réfrigération à absorption (8e), la machine de réfrigération à absorption (8e) ayant une branche de réfrigérant et un circuit de solution, la machine de réfrigération à absorption (8e) ayant un éjecteur au niveau duquel la branche de réfrigérant se sépare du circuit de solution, et un absorbeur, au niveau duquel la branche de réfrigérant est réintroduite dans le circuit de solution, la branche de réfrigérant ayant un évaporateur et un condenseur, le premier échangeur de chaleur à gaz (8f) étant relié à l'expandeur de la machine frigorifique à absorption (8e).

2. Système selon la revendication 1, **caractérisé par le fait que** le premier échangeur de chaleur à gaz (8f) est disposé entre la sortie de gaz du préchauffeur (1) et le dispositif de séparation du dioxyde de carbone (9).

3. Système selon l'une des revendications précédentes, **caractérisé par le fait que** le refroidisseur de produits possède au moins une première sortie de refroidisseur de gaz chauds, dans lequel le premier échangeur de chaleur à gaz (8f) ou un second échangeur de chaleur à gaz (8a) est connecté à la première sortie de refroidisseur de gaz chauds du refroidisseur de produits.

4. Installation selon la revendication 3, **caractérisée par le fait que** le refroidisseur de produits comprend au moins une deuxième sortie de refroidisseur de gaz chauds, l'installation comprenant un troisième échangeur de chaleur à gaz (8b), le troisième échangeur de chaleur à gaz (8b) étant connecté à une deuxième sortie de refroidisseur de gaz chauds du refroidisseur de produits, le troisième échangeur de chaleur à gaz (8b) étant connecté à la sortie de la machine de réfrigération à absorption (8e).

5. Système selon la revendication 4, **caractérisé par le fait que** le premier échangeur de chaleur à gaz (8f) ou le deuxième échangeur de chaleur à gaz (8a) et le troisième échangeur de chaleur à gaz (8b) sont reliés à un dispositif de collecte de chaleur, dans lequel le dispositif de collecte de chaleur est relié à l'unité de décharge de la machine frigorifique à absorption (8e).

6. Système selon l'une des revendications 3 à 5, **caractérisé par le fait qu'**un échangeur de chaleur à gaz chaud (8a) est disposé en amont entre le refroidisseur de produits et l'échangeur de chaleur à gaz, l'échangeur de chaleur à gaz chaud (8a) étant relié à une turbine et la turbine étant reliée à un générateur pour la production d'électricité.

7. Installation selon l'une des revendications précédentes en liaison avec la revendication 2, **caractérisée en ce qu'**un quatrième échangeur de chaleur à gaz est disposé entre le préchauffeur (1) et le premier échangeur de chaleur à gaz (8f), le quatrième échangeur de chaleur à gaz étant relié au circuit d'échappement de la machine frigorifique à absorption (8e), au moins un premier dispositif de traitement des gaz d'échappement étant disposé entre le quatrième échangeur de chaleur à gaz et le premier échangeur de chaleur à gaz (8f).

8. Système selon l'une des revendications précédentes, **caractérisé par le fait que** le dispositif de séparation du dioxyde de carbone (9) comporte un séparateur d'eau.

9. Procédé de fonctionnement d'une installation de production de clinker de ciment et de séparation du dioxyde de carbone, dans lequel le froid est nécessaire pour la séparation du dioxyde de carbone, dans lequel le froid est généré au moyen d'une machine de réfrigération à absorption (8e), dans lequel l'unité d'expulsion est équipée d'un fluide de transfert de chaleur, de préférence de la vapeur, d'une température maximale de 350°C, dans lequel le fluide de transfert de chaleur, de préférence la vapeur, est généré par un premier échangeur de chaleur à gaz (8f), dans lequel le premier échangeur de chaleur à gaz (8f) est un composant de l'installation de production de clinker de ciment.

10. Procédé selon la revendication 9, **caractérisé par le fait qu'**un échangeur de chaleur à gaz chaud (8a) est utilisé en amont de l'échangeur de chaleur à gaz pour refroidir la chaleur résiduelle de plus de 350°C à un maximum de 200°C, l'échangeur de chaleur à gaz chaud (8a) produisant de l'électricité avec une turbine et la turbine produisant de l'électricité avec un générateur.

11. Procédé selon l'une des revendications 9 à 10, **caractérisé par le fait que** le fluide caloporteur est de la vapeur, la vapeur étant utilisée à une pression de 2 à 15 bars.

12. Procédé selon l'une des revendications 9 à 11, **caractérisé par le fait que** le four (3) et le calcinateur (2) sont alimentés par un gaz contenant moins de 50 % d'azote, de préférence moins de 5 % d'azote.

13. Procédé selon la revendication 12, **caractérisé par le fait que** l'installation est exploitée de manière à ce qu'un flux gazeux contenant au moins 60 % de dioxyde de carbone soit acheminé vers le dispositif de séparation du dioxyde de carbone (9).
